# EUROPÄISCHE PATENTANMELDUNG

(11) **EP 1 318 560 A2**
(43) Veröffentlichungstag der Anmeldung: **11.06.2003**
(21) Anmeldenummer: 02027057.5
(22) Anmeldetag: 03.12.2002
(51) Int. Cl.: H01M 8/12

(54) **Träger für eine elektrochemische Funktionseinheit einer Hochtemperatur-Brennstoffzelle und Hochtemperatur-Brennstoffzelle**

(30) Priorität: 10.12.2001 DE 10161538
(71) Anmelder: Deutsches Zentrum für Luft- und Raumfahrt e.V., 51147 Köln (DE); Haver & Boecker, 59302 Oelde (DE)
(72) Erfinder: Franco, Thomas, 73430 Aalen (DE); Lang, Michael, Dr., 73079 Süssen (DE); Schiller, Günter, Dr., 71292 Friolzheim (DE); Meyer, Frank, 49196 Bad Laer (DE)
(74) Vertreter: Hoeger, Stellrecht & Partner

(57) **Zusammenfassung**

Um einen Träger für eine elektrochemische Funktionseinheit einer Hochtemperatur-Brennstoffzelle mit einer Oberfläche zur Anordnung der elektrochemischen Funktionseinheit, wobei der Träger zur Zuführung von Reaktanden zu einer Elektrode der elektrochemischen Funktionseinheit und/oder Abführung von Reaktionsprodukten von der Elektrode eine Porosität aufweist, zu schaffen, welcher für die elektrochemische Funktionseinheit eine hohe mechanische Stabilität mit optimierten Eigenschaften bezüglich der elektrochemischen Umsetzungen an der elektrochemischen Funktionseinheit bereitstellt, ist eine Matrixstruktur mindestens in einem die Oberfläche für die elektrochemische Funktionseinheit umfassenden Teilbereich vorgesehen, welche die Stützstruktur für die elektrochemische Funktionseinheit bildet, und eine Sekundärstruktur aus einem elektrisch leitfähigen Material vorgesehen, welche für eine elektrische Leitfähigkeit quer zur Oberfläche für die elektrochemische Funktionseinheit sorgt.

## Beschreibung

Die Erfindung betrifft einen Träger für eine elektrochemische Funktionseinheit einer Hochtemperatur-Brennstoffzelle, mit einer Oberfläche zur Anordnung der elektrochemischen Funktionseinheit, wobei der Träger zur Zuführung von Reaktanden zu einer Elektrode der elektrochemischen Funktionseinheit und/oder Abführung von Reaktionsprodukten von der Elektrode eine Porosität aufweist.

Ferner betrifft die Erfindung eine Hochtemperatur-Brennstoffzelle, umfassend eine elektrochemische Funktionseinheit mit einer Anode, mit einem oxidkeramischen Elektrolyt und mit einer Kathode.

Derartige Hochtemperatur-Brennstoffzellen werden auch als SOFC (Solid Oxide Fuel Cell) bezeichnet. Sie arbeiten in einem Temperaturbereich um 900°C und weisen einen hohen Wirkungsgrad auf. Die in diesem Temperaturbereich anfallende Abwärme kann ebenfalls genutzt werden.

Es sind beispielsweise Hochtemperatur-Brennstoffzellen nach dem Röhrenkonzept bekannt, wobei ein Rohr eine tragende Funktion hat und die mechanische Stabilität der Brennstoffzelle gewährleisten muß. Auf das Rohr werden die entsprechenden Funktionsschichten in definierter Geometrie und Reihenfolge aufgebracht, wobei im Betrieb das Rohr durch das Oxidationsmittel durchströmt ist.

Bei dem sogenannten planaren Konzept werden elektrochemische Funktionsschichten auf einen Träger mit einer planaren Oberfläche aufgebracht. Siehe dazu beispielsweise den Artikel "Investigation of porous metallic substrates for plasma sprayed thin-film SOFC" von T. Franco et al., 15^{th} International Plansee Seminar, Reutte, 28. Mai bis 1. Juni 2001. Dieses Konzept ist besonders geeignet, um Brennstoffzellenstapel durch die Hintereinanderschaltung von einzelnen Brennstoffzellen zu bilden.

Für die elektrochemische Funktionseinheit ist ein Träger notwendig, d. h. ein Substrat notwendig, auf dem diese aufgebracht werden kann.

In der DE 195 19 847 C1 beispielsweise ist ein Anodensubstrat mit einer darauf aufgebrachten bipolaren Platte offenbart, welches bezüglich der Methan-Dampf-Reformierungsreaktion eine nicht katalytisch wirkende sowie eine katalytisch wirkende Phase aufweist.

Der oben erwähnte Artikel von T. Franco et al. beschreibt poröse Metallsubstrate als Träger für die elektrochemische Funktionseinheit.

Davon ausgehend liegt der Erfindung die Aufgabe zugrunde, einen Träger der eingangs genannten Art zu schaffen, welcher für die elektrochemische Funktionseinheit einer Hochtemperatur-Brennstoffzelle eine hohe mechanische Stabilität mit optimierten Eigenschaften bezüglich der elektrochemischen Umsetzungen an der elektrochemischen Funktionseinheit bereitstellt.

Diese Aufgabe wird bei dem Träger für eine elektrochemische Funktionseinheit der gattungsgemäßen Art erfindungsgemäß dadurch gelöst, daß eine Matrixstruktur mindestens in einem die Oberfläche für die elektrochemische Funktionseinheit umfassenden Teilbereich vorgesehen ist, welche die Stützstruktur für die elektrochemische Funktionseinheit bildet, und daß eine Sekundärstruktur aus einem elektrisch leitfähigen Material vorgesehen ist, welche für eine elektrische Leitfähigkeit quer zur Oberfläche für die elektrochemische Funktionseinheit sorgt.

Durch eine funktionelle Trennung in eine Matrixstruktur und eine Sekundärstruktur läßt sich der Träger bezüglich unterschiedlicher und insbesondere physikalischer Eigenschaften optimieren, indem nämlich Matrixstruktur und Sekundärstruktur bezüglich jeweils bestimmten Eigenschaften optimiert sind und insgesamt dann der Träger gesamtoptimierte Eigenschaften aufweist.

Die Matrixstruktur hat die wesentliche Stütz- und Haltefunktion für die elektrochemische Funktionseinheit und sichert damit die mechanische Stabilität der Brennstoffzelle. Dadurch wiederum lassen sich entsprechende elektrochemische Funktionsschichten der elektrochemischen Funktionseinheit sehr dünn ausbilden. Es läßt sich dann eine Hochtemperatur-Brennstoffzelle optimiert betreiben; wird beispielsweise ZrO₂ als Elektrolyt eingesetzt, so ist eine entsprechend hohe Temperatur beispielsweise in der Größenordnung von 900°C zu wählen, damit bei einem konventionellen Aufbau noch ein genügender Sauerstoffionen-Transport durch den Elektrolyten hindurch zwischen Kathode und Anode stattfinden kann. Übernimmt der Träger die wesentliche Stützfunktion und damit die mechanische Stabilität, dann läßt sich entsprechend der Elektrolyt dünner ausbilden und dadurch wiederum läßt sich die Temperatur absenken, mit welcher die Hochtemperatur-Brennstoffzelle betrieben wird. Dies hat zur Folge, daß geringere Korrosionsprobleme und Oxidationsprobleme auftreten.

Insbesondere kann die Matrixstruktur in Aufbau und Materialwahl an die elektrochemische Funktionseinheit angepaßt werden, indem beispielsweise ein Material gewählt wird, welches eine mit insbesondere dem oxidkeramischen Elektrolyten der Hochtemperatur-Brennstoffzelle vergleichbaren thermischen Ausdehnungskoeffizient hat. Dadurch werden thermische Spannungen zwischen elektrochemischer Funktionseinheit und dem Träger weitgehend vermieden, wodurch wiederum die Schichthaftung verbessert ist und das Problem der Rissbildung minimiert ist.

Weiterhin lassen sich für die Matrixstruktur Materialien einsetzen, welche eine hohe Korrosionsbeständigkeit und insbesondere Oxidationsbeständigkeit aufweisen. Ein Beispiel für solche Materialien sind Chrom und/oder Aluminium enthaltende Legierungen. Diese bilden eine Oxiddeckschicht (Chromoxid - und/oder Aluminiumoxid-Deckschicht) aus, die eben für die hohe Oxidationsbeständigkeit sorgt. Da aber diese Oxidschicht einen elektrischen Ladungstransport weitgehend verhindert, da sie eine entsprechend niedrige elektrische Leitfähigkeit aufweist, sorgt wiederum die Sekundärstruktur für den notwendigen Ladungstransportfähigkeit zwischen der elektrochemischen Funktionseinheit und einer Bipolarplatte. Die Sekundärstruktur muß dann so ausgebildet sein, daß sie Leitungspfade aufweist, ohne dadurch die mechanischen, thermischen und chemischen Eigenschaften des Trägers wesentlich zu verschlechtern.

Durch den erfindungsgemäßen Träger lassen sich damit Hochtemperatur-Brennstoffzellen auf einfache und kostengünstige Weise mit hoher Reproduzierbarkeit herstellen, wobei solche Brennstoffzellen optimierte elektrochemische Eigenschaften aufweisen.

Insbesondere ist es vorteilhaft, wenn das Material für die Matrixstruktur einen thermischen Ausdehnungskoeffizienten aufweist, welcher mindestens im Betriebsbereich der Hochtemperatur-Brennstoffzelle an einen Elektrolyt der elektrochemischen Funktionseinheit angepaßt ist. Dadurch wird ein thermischer Mismatch zwischen Träger und elektrochemischer Funktionseinheit aufgrund eines zu hohen Unterschieds in der thermischen Ausdehnung zwischen Träger und insbesondere Elektrolyt der elektrochemischen Funktionseinheit vermieden, wodurch wiederum die Schichthaftung verbessert wird und Rißbildung verringert ist.

Insbesondere weist dabei das Material für die Matrixstruktur einen thermischen Ausdehnungskoeffizienten im Bereich zwischen 9 · 10⁻⁶ K⁻¹ und 14 · 10⁻⁶ K⁻¹ auf und vorzugsweise bei 11 · 10⁻⁶ K⁻¹ auf. Dadurch liegt eine gute Anpassung bezüglich des oxidkeramischen Festkörperelektrolyten (insbesondere ZrO₂) vor.

Weiterhin ist es günstig, wenn das Material für die Matrixstruktur und Sekundärstruktur eine hohe Korrosionsbeständigkeit und Oxidationsbeständigkeit aufweist, um eine Degradierung des Trägers zu vermeiden, was beispielsweise auch dessen mechanische Stabilität und somit wiederum dessen Stützfunktion beeinträchtigen könnte.

Insbesondere ist eine parabolische Oxidationskonstante des Materials für die Matrixstruktur und Sekundärstruktur in oxidierender Atmosphäre kleiner als 10⁻⁷ kg²m⁻⁴s⁻¹ mindestens unterhalb 1000 °C.

Ganz besonders vorteilhaft ist es, wenn das Material für die Matrixstruktur eine Chrom umfassende Legierung ist und/oder eine Aluminium umfassende Legierung ist. Werkstücke aus solchen Legierungen weisen eine hohe Oxidationsbeständigkeit auf. Dies ist darauf zurückzuführen, daß sich Oxid-Deckschichten ausbilden, die thermisch sehr stabil sind und dadurch der Träger unter den Betriebsbedingungen einer Hochtemperatur-Brennstoffzelle eine hohe Beständigkeit gegenüber Oxidation aufweist, und zwar insbesondere die Matrixstruktur des Trägers.

Grundsätzlich ist es wünschenswert, daß die Sekundärstruktur einen möglichst geringen Volumenanteil mindestens eines Teilbereichs des Trägers einnimmt, so daß eine hohe mechanische Stabilität für das Halten der elektrochemischen Funktionseinheit und eine gute thermische Anpassung an diese gewährleistet ist. In der Stützstruktur müssen dabei Leitungspfade hergestellt werden, über die ein Querladungstransport von der Oberfläche des Trägers zu einer Begrenzungsfläche sichergestellt ist, welche beispielsweise mit einer Bipolarplatte verbunden ist. Es hat sich als günstig erwiesen, wenn die Sekundärstruktur, insbesondere wenn sie mittels Nickel oder einer Nickellegierung hergestellt ist, bezüglich ihres Gewichtsanteils im Träger zwischen 10 % und 60 % liegt und insbesondere größer als 30 % liegt. Es lassen sich dann die entsprechenden Leitungspfade ausbilden.

Günstigerweise ist die Sekundärstruktur in die Matrixstruktur eingebettet, um so eben die elektrische Querleitfähigkeit bezogen auf die Oberfläche für die elektrochemische Funktionseinheit sicherzustellen. Durch eine entsprechende (unlegierte) Einbettung läßt sich auch eine sichere mechanische Verknüpfung zwischen Matrixstruktur und Sekundärstruktur erreichen.

Bei einer Variante einer Ausführungsform ist es vorgesehen, daß die Sekundärstruktur so ausgebildet ist, daß eine Ladungstransportfähigkeit von der Oberfläche für die elektrische Funktionseinheit mindestens bis zu einer dieser Oberfläche abgewandten Begrenzungsfläche als Teilbereich hergestellt ist. Dadurch läßt sich eine zusätzliche Entkopplung bezüglich Herstellung und Optimierung des Trägers erreichen, indem insbesondere von der entsprechenden auf den Träger aufgebrachten Elektrodenschicht weg her die elektrische Leitfähigkeit sichergestellt ist, während in einem weiteren Teilbereich des Trägers dieser beispielsweise dahingehend optimiert werden kann, daß er an einer Bipolarplatte mechanisch und elektrisch fixiert wird.

Es hat sich als günstig erwiesen, wenn das Material für die Sekundärstruktur Nickel oder eine Nickellegierung oder ein ferritischer Stahl oder ein Edelmetall ist. Dadurch weist die Sekundärstruktur eine entsprechend hohe Leitfähigkeit auf. Andererseits ist die Oxidationsbeständigkeit von Nickel sehr hoch.

Ein erfindungsgemäßer Träger läßt sich auf konstruktiv einfache Weise und insbesondere kostengünstig herstellen, wenn er mittels eines oder mehrerer Drahtgeweben ausgebildet ist. Durch entsprechende Materialwahl der zu verwebenden Drähte, Webart des Gewebes und Wahl der entsprechenden Maschenweiten läßt sich eine Optimierung des Trägers für eine Optimierung der Eigenschaften der Hochtemperatur-Brennstoffzelle erreichen.

Auf konstruktiv einfache Weise ist die Sekundärstruktur durch Schußdrähte gebildet. Diese Schußdrähte bilden dann mindestens teilweise die Oberfläche des Trägers und verlaufen zu einer unteren Begrenzungsfläche mindestens des Teilbereichs, in dem für eine elektrische Querleitfähigkeit über die Sekundärstruktur gesorgt ist. Durch Einwebung der Schußdrähte in Kettdrähte ist dabei eben für diesen, die Querleitfähigkeit herstellenden Verlauf gesorgt.

Vorteilhafterweise ist das Drahtgewebe oder ein Drahtgewebe als Tresse ausgebildet. Eine Tresse ist ein Drahtgewebe, bei dem Schußdrähte und Kettdrähte unterschiedliche Durchmesser aufweisen. Die Schußdrähte und Kettdrähte haben dabei einen definierten Abstand jeweils zueinander. Insbesondere sind dabei Kettdrähte stärker als Schußdrähte. Es läßt sich dabei eine Porosität ausbilden, welche einen guten Gasdurchfluß zu der elektrochemischen Funktionseinheit und einen guten Abtransport von Reaktionsprodukten von dieser erlaubt. Weiterhin sind die entsprechenden Poren gleichmäßig angeordnet und eine gute thermische Zyklierbarkeit ist bereitgestellt, das heißt der Träger mit der elektrochemischen Funktionseinheit läßt sich schnell aufund abheizen. Dies ist gewährleistet durch die hohe Wärmeleitfähigkeit und die niedrige spezifische Wärmekapazität des Trägers.

Insbesondere ist es vorgesehen, daß die Tresse in Körperbindung gewebt ist (Körpertresse); dabei werden die Schußdrähte dicht aneinandergeschlagen, wobei ein Draht jeweils über und ein Draht unter dem Kettdraht liegt. Dadurch ergeben sich glatte und stabile Oberflächen. Auf eine solche Oberfläche wiederum läßt sich eine Elektrodenschicht, beispielsweise eine Anodenschicht, direkt aufbringen, ohne daß eine Deckschicht vorgesehen werden muß, wobei die Elektrodenschicht sich mit hoher Planarität herstellen läßt. Darüber hinaus verlaufen bei einem solchen Drahtgewebe die Poren im wesentlichen senkrecht zur Oberfläche, wodurch wiederum die Planarität der Oberfläche sichergestellt ist.

Ganz besonders vorteilhaft ist es, wenn insbesondere im Zusammenhang mit den Merkmalen gemäß Oberbegriff von Anspruch 1 eine Porengröße an der Oberfläche für die elektrochemische Funktionseinheit kleiner ist als eine Porengröße an einer Oberfläche zur Verbindung des Trägers mit einer Bipolarplatte. Dadurch läßt sich der Träger mit der Bipolarplatte verlöten, ohne daß aufgrund eines Kapillareffekts Lot in die Poren eindringt und diese verstopft und damit wiederum die Porosität erniedrigt. Andererseits ist die Oberfläche derart ausbildbar, daß sich eine Elektrodenschicht auf diese insbesondere mittels eines Dünnschichtverfahrens aufbringen läßt.

Bei einer Variante einer Ausführungsform weist der Träger einen mehrlagigen Aufbau auf. Die Lagen sind dann so ausgestaltet, daß der Träger in seiner Gesamtwirkung optimiert ist.

Benachbarte Trägerlagen sind dabei insbesondere durch Verschweißung oder Versinterung miteinander verbunden, wobei es vorgesehen ist, daß beispielsweise eine Versinterung unter Vakuumbedingungen erfolgt, so daß keine Oxidation der Kontaktstellen auftritt und damit der Ladungstransport auch zwischen benachbarten Trägerlagen sichergestellt ist.

Günstig ist es, wenn ein Teilbereich mit elektrischer Querleitfähigkeit durch eine die Oberfläche für die elektrochemische Funktionseinheit aufweisende Trägerlage gebildet ist. Dadurch ist sichergestellt, daß von der Oberfläche, welche in direkter Verbindung beispielsweise mit einer Anode der elektrochemischen Funktionseinheit steht, Ladungen über den Träger abgeführt werden können und damit wiederum ein elektrischer Kreis bezüglich der Brennstoffzelle schließbar ist.

Vorteilhafterweise umfaßt der Träger ein Fein-Drahtgewebe, welches die Oberfläche für die elektrochemische Funktionseinheit bildet, und mindestens ein sich anschließendes Grob-Drahtgewebe. Durch einen solchen mehrlagigen und insbesondere zweilagigen Aufbau erhält man eine Gradierung in der Porosität, so daß die Poren an der Oberfläche für die elektrochemische Funktionseinheit einen geringeren Durchmesser aufweisen als die Poren an einer Begrenzungsfläche des Trägers, über die dieser an einer Bipolarplatte fixiert ist. Dadurch wiederum läßt sich die Bipolarplatte mit dem Träger über das Grob-Drahtgewebe verlöten, während sich auf das Fein-Drahtgewebe elektrochemische Funktionsschichten mit hoher Planarität aufbringen lassen.

Insbesondere ist dabei das Fein-Drahtgewebe als Tresse ausgebildet.

Bei dem Grob-Drahtgewebe kann es sich um ein "normales" Drahtgewebe handeln, welches in Leinenbindung gewebt ist. Dadurch ist unter minimiertem Fertigungsaufwand eine exakte Maschenform hergestellt.

Insbesondere ist das Fein-Drahtgewebe so ausgebildet und so dimensioniert, daß eine Elektrodenschicht direkt aufbringbar ist, d. h. daß keine zusätzliche Deckschicht vorgesehen werden muß, um die Elektrodenschicht insbesondere über ein Dünnschichtverfahren aufzubringen.

Beispielsweise ist eine Maschenweite des Fein-Drahtgewebes in einer Richtung kleiner als 0,4 mm und in der Querrichtung kleiner als 2 mm.

Bei einer Variante einer Ausführungsform ist es vorgesehen, daß das mindestens eine Grob-Drahtgewebe so ausgebildet und aus einem solchen Material hergestellt ist, daß es eine elektrische Leitfähigkeit mindestens zu seinen seitlichen Enden hin aufweist. Dadurch lassen sich Ladungen zu seinen seitlichen Enden hin abführen, die dann insbesondere wiederum mit einer Bipolarplatte verbunden und vorzugsweise verschweißt und/oder verlötet sind. Dadurch wiederum ist für eine gute elektrische Leitfähigkeit des Trägers und damit für einen Ladungstransport von der Oberfläche des Trägers weg her gesorgt.

Günstigerweise ist die Oberfläche für die elektrochemische Funktionseinheit im wesentlichen eben ausgebildet, so daß sich elektrochemische Funktionsschichten mit hohem Planaritätsgrad herstellen lassen. Dadurch wiederum lassen sich Hochtemperatur-Brennstoffzellen gemäß dem planaren Konzept ausbilden, die sich zu einem Brennstoffzellenstapel hintereinanderschalten lassen.

Ferner liegt der Erfindung die Aufgabe zugrunde, eine Hochtemperatur-Brennstoffzelle zu schaffen, welche eine hohe mechanische und chemische Stabilität aufweist.

Diese Aufgabe wird bei der eingangs genannten Hochtemperatur-Brennstoffzelle erfindungsgemäß dadurch gelöst, daß die elektrochemische Funktionseinheit auf einem erfindungsgemäßen Träger angeordnet ist.

Die erfindungsgemäße Hochtemperatur-Brennstoffzelle weist die entsprechenden Vorteile auf, die bereits im Zusammenhang mit dem erfindungsgemäßen Träger erläutert wurden.

Insbesondere ist dabei die Anode auf der Oberfläche des Trägers aufgebracht, so daß der Träger zur Brennstoffzuführung zur Anode dient und gegebenenfalls zur Reaktionsproduktabführung von der Anode.

Ganz besonders vorteilhaft ist es, wenn die elektrochemische Funktionseinheit in Dünnschichttechnologie hergestellt ist. Diese läßt sich dadurch entsprechend dünn ausbilden, so daß für eine entsprechende Porosität gesorgt ist, so daß wiederum eine hohe Oberfläche für die elektrochemischen Reaktionen bereitgestellt ist. Zum anderen läßt sich damit die festkörperelektrolytische Schicht dünn herstellen, um so für eine hohe Ionentransportfähigkeit zu sorgen. Dadurch läßt sich die Hochtemperatur-Brennstoffzelle auch zu niedereren Temperaturen hin betreiben, um so wiederum einen größeren Arbeitsbereich zu erhalten. Alternativ kann dann die Hochtemperatur-Brennstoffzelle mit niedereren Temperaturen betrieben werden, um entsprechend die Korrosionsprobleme und Oxidationsprobleme zu reduzieren.

Insbesondere sitzt der Träger an einer Bipolarplatte, welche benachbarte Brennstoffzellen elektrisch hintereinanderschaltet und gasdicht voneinander trennt. Aufgrund der elektrischen Querleitfähigkeit des Trägers ist damit der Ladungstransport von der elektrochemischen Funktionseinheit und insbesondere von einer Anode durch den Träger hindurch zu der Bipolarplatte sichergestellt.

Der Träger ist vorzugsweise an die Bipolarplatte gelötet und/oder mit dieser verschweißt, um für einen guten elektrischen Kontakt zwischen Träger und Bipolarplatte zu sorgen und außerdem für eine sichere mechanische Fixierung. Beispielsweise weist die Bipolarplatte Stege auf, zwischen denen Brennstoff zugeführt wird, und der Träger ist auf diese Stege gelötet und/oder der Träger ist mit seitlichen Rändern mit der Bipolarplatte verschweißt.

Günstigerweise ist in der Bipolarplatte einer der Oberfläche für die elektrochemische Funktionseinheit abgewandten Oberfläche des Trägers zuweisend ein Gaszuführungsraum gebildet. Über diesen Gaszuführungsraum läßt sich der entsprechenden Oberfläche des Trägers ein Reaktand zuführen, der dann aufgrund der Porosität des Trägers der elektrochemischen Funktionseinheit zuführbar ist.

Die nachfolgende Beschreibung einer bevorzugten Ausführungsform dient im Zusammenhang mit der Zeichnung der näheren Erläuterung der Erfindung. Es zeigen:
- Figur 1: eine schematische Teilschnittansicht eines Brennstoffzellenstapels mit einer erfindungsgemäßen Brennstoffzelle;
- Figur 2: eine vergrößerte Ansicht des Ausschnitts A in Figur 1;
- Figur 3: eine Schnittansicht eines Ausführungsbeispiels eines erfindungsgemäßen Trägers und
- Figur 4: die Abhängigkeit der parabolischen Oxidationskonstante kₚ von der Temperatur für einige Werkstoffe in oxidierender Atmosphäre.

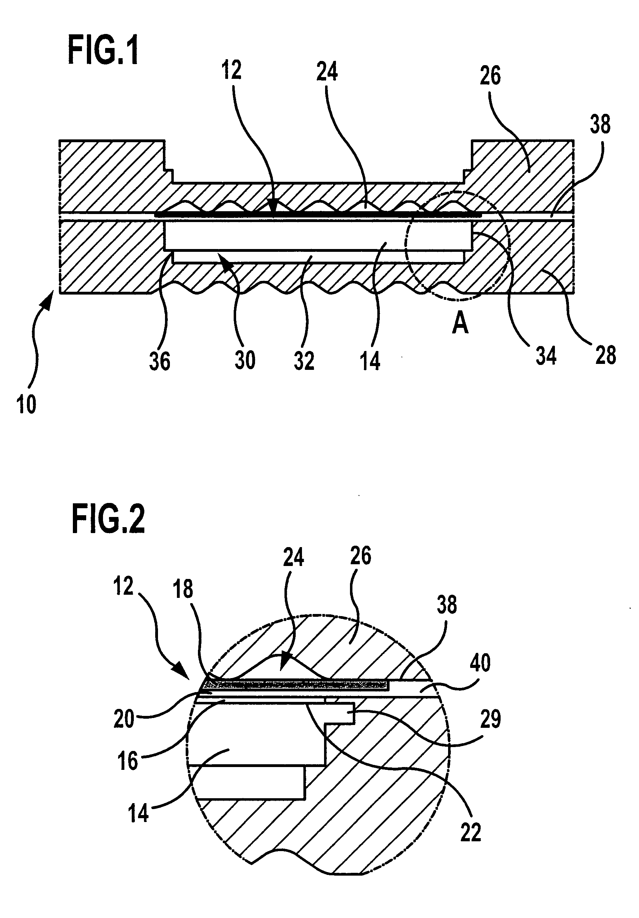

Ein Ausführungsbeispiel einer erfindungsgemäßen Hochtemperatur-Brennstoffzelle, welche in Figur 1 als Ganzes mit 10 bezeichnet ist, umfaßt eine elektrochemische Funktionseinheit 12, welche auf einem stützenden Träger 14 angeordnet ist, der die erforderliche mechanische Stabilität zum Halten der elektrochemischen Funktionseinheit 12 bereitstellt.

Die elektrochemische Funktionseinheit 12 selber umfaßt eine Anode 16, eine Kathode 18 und einen Anode und Kathode trennenden Elektrolyten 20. Die Anode 16 ist als Elektrodenschicht auf einer Oberfläche 22 des Trägers 14 aufgebracht. Es handelt sich dabei beispielsweise um eine poröse ZrO₂/Ni-Anode. Bei dem Elektrolyten 20 handelt es sich um einen Festkörperelektrolyten und insbesondere oxidkeramischen Elektrolyten, welcher Sauerstoffionen leitet. Beispielsweise wird eine ZrO₂-Elektrolyt verwendet. Der Elektrolyt 20 ist ferner gasdicht, so daß die Anode 16 und die Kathode 18 bezüglich ihrer jeweiligen gasförmigen Reaktanden voneinander getrennt sind.

Die Kathode 18 ist ebenfalls als Elektrodenschicht ausgebildet. Beispielsweise handelt es sich um eine poröse (La, Sr)MnO₃-Kathode.

Eine Hochtemperatur-Brennstoffzelle mit einem Festkörperelektrolyten wird auch als SOFC ("Solid Oxide Fuel Cell") bezeichnet. Sie wird in einem Temperaturbereich von typischerweise 900 °C bis 1000 °C eingesetzt und weist einen hohen Wirkungsgrad auf. Die bei den hohen Einsatztemperaturen anfallende Abwärme kann ebenfalls genutzt werden.

Zur Zuführung eines Reaktanden, nämlich gasförmiger Sauerstoff oder Luftsauerstoff, zur Kathode 18 ist ein Gasverteiler 24 vorgesehen, über den die Kathode 18 möglichst großflächig mit Sauerstoff beaufschlagbar ist. Bei dem in den Figuren 1 und 2 gezeigten Ausführungsbeispiel ist der Gasverteiler 24 in einer Bipolarplatte 26 gebildet, welche die Kathode 18 der'Brennstoffzelle 10 elektrisch mit der Anode einer benachbarten Brennstoffzelle verbindet, um so die beiden Brennstoffzellen elektrisch in Serie zu schalten. Der Gasverteiler 24 selber ist durch eine Zuführungskanäle aufweisende Ausgestaltung einer der Kathode 18 zugewandten Oberfläche der Bipolarplatte 26 gebildet, wobei er in einer Längsrichtung (quer zur Blattrichtung der Zeichnung gemäß Figuren 1 und 2) durchströmbar ist.

An der Kathode 18 wird gasförmiger Sauerstoff unter Elektronenaufnahme reduziert. Die dabei entstehenden Sauerstoffionen wandern durch den Elektrolyten 20 zur Anode 16.

Der Träger 14 sitzt in einer Bipolarplatte 28, welche eine entsprechende Ausnehmung 30 aufweist. Diese Ausnehmung ist stufenförmig ausgebildet mit einem Gaszuführungsraum 32 zur Zuführung von Reaktionsgas, nämlich Wasserstoff als Brennstoff, zu der Anode 16. Ferner umfaßt die Ausnehmung 30 einen Aufnahmeraum 34, in dem der Träger 14 sitzt. Dazu weist der Aufnahmeraum 34 eine Auflagenfläche 36 zum Aufsetzen des Trägers 14 auf.

Der Träger 14 ist insbesondere an seine dem Gaszuführungsraum 32 zugewandten Unterseite mit der Bipolarplatte 28 verlötet und in seinen Querrandbereichen mit dieser verschweißt, um so eine gasdichte und mechanisch stabile Fixierung in dieser zu erhalten, wobei eine elektrische Kontaktierung hergestellt ist.

Beispielsweise umfaßt der Träger einen verdichteten Randbereich 29, über den er mit der Bipolarplatte 28 verschweißt ist.

Der Träger 14 weist eine derartige Porosität auf, daß Wasserstoffgas durch den Träger 14 hindurch zu der Anode 16 strömen kann und dort elektrochemisch reagiert. Der Wasserstoff oxidiert über die durch den Elektrolyten 20 transportieren Sauerstoffionen unter Wasserbildung, so daß an der Brennstoffzelle insgesamt die Reaktion 2H₂ + O₂ → H₂O stattfindet. Als Brennstoff kann auch Methan oder Erdgas eingesetzt werden, die in der Brennstoffzelle 10 vorwiegend zu Wasserstoff und Kohlenmonoxid reformiert werden.

Die Bipolarplatte 28, welche gleich ausgebildet ist wie die Bipolarplatte 26, verbindet die Anode 16 elektrisch mit der Kathode einer benachbarten Brennstoffzelle, um die oben erwähnte Hintereinanderschaltung von mehreren Brennstoffzellen zu einem Brennstoffzellenstapel zu erhalten.

Die entsprechenden Funktionsschichten der elektrochemischen Funktionseinheit 12, nämlich die Anode 16, die Kathode 18 und der Elektrolyt 20, sind im wesentlichen eben ausgebildet, so daß eine einfache Hintereinanderschaltung einer Mehrzahl von Brennstoffzellen zu einem Brennstoffzellenstapel ermöglicht ist.

Es kann noch vorgesehen sein, daß auf der Kathode 18 der Bipolarplatte 26 zuweisend eine Kontaktschicht angeordnet ist, um den elektrischen Kontakt zu verbessern. Ferner kann es vorgesehen sein, daß die Bipolarplatte 26 der Kathode 18 zugewandt mit einer Schutzschicht 38 versehen ist. Ferner ist zwischen der Bipolarplatte 26 und der Bipolarplatte 28 außerhalb der elektrochemischen Funktionseinheit 12 eine Lot- und Distanzschicht 40 angeordnet, um die beiden Bipolarplatten 26 und 28 in einem definierten Abstand zueinander zu halten und gegeneinander abzudichten, um die dazwischen angeordnete, auf dem Träger 14 sitzende elektrochemische Funktionseinheit 12 sicher mit gutem elektrischen Kontakt zu positionieren.

Es kann beispielsweise vorgesehen sein, daß die Anodenschicht 16 eine Dicke der Größenordnung 50 µm, der Elektrolyt eine Dicke der Größenordnung 50 µm und die Kathodenschicht 18 ebenfalls eine Dicke in der Größenordnung von 50 µm aufweist.

Der Träger 14 weist beispielsweise eine Dicke der Größenordnung 1 mm auf.

Der Träger 14 ist entsprechend so ausgebildet, daß er die relativ dünne elektrochemische Funktionseinheit 12 hält und für die notwendige mechanische Stabilität sorgt. Dadurch wiederum ist es möglich, die elektrochemischen Funktionsschichten 16, 18 und 20 dünn herzustellen und insbesondere mittels Dünnschichttechnologieverfahren herzustellen.

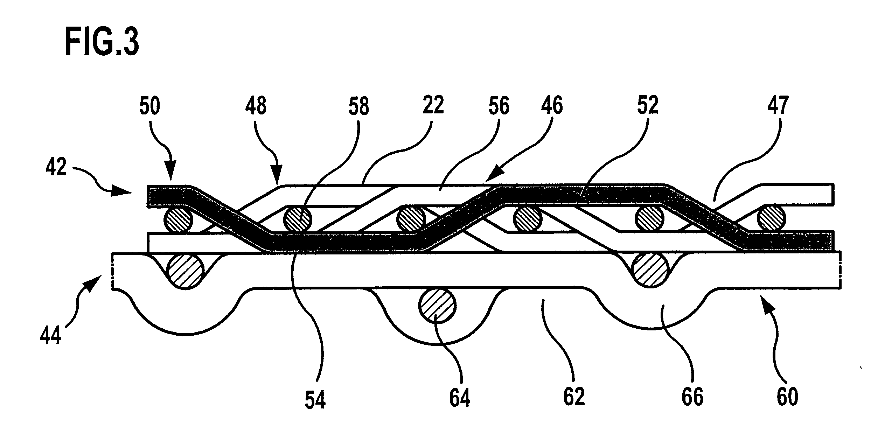

Der Träger 14 ist, wie in Figur 3 gezeigt, mehrlagig aufgebaut und weist insbesondere zwei Lagen auf, nämlich eine erste Lage 42, welche die Oberfläche 22 ausbildet, und eine zweite Lage 44, welche dem Gaszuführungsraum 32 zugewandt ist.

Die erste Lage 42 umfaßt insbesondere ein Drahtgewebe 46, welches mit Hilfe von metallischen Drähten gewebt ist. Dieses Drahtgewebe weist Poren 47 auf, welche im wesentlichen quer und insbesondere senkrecht zur Oberfläche 22 ausgerichtet sind, so daß über diese Poren Brennstoff der elektrochemischen Funktionseinheit 12 auf der Oberfläche 22 zuführbar ist.

Das Drahtgewebe 46 weist in seiner Lage 42 eine Matrixstruktur 48 auf, welche den überwiegenden Volumenanteil dieser ersten Lage 42 einnimmt und welche die eigentliche Stützstruktur für die elektrochemische Funktionsschicht 12 bildet, d. h. welche für die mechanische Stabilität sorgt.

Diese Matrixstruktur 48 ist aus einem Material gefertigt, welches einen an den Festkörperelektrolyten angepaßten thermischen Ausdehnungskoeffizienten hat. Bei einem ZrO₂-Elektrolyt liegt solch ein angepaßter thermischer Ausdehnungskoeffizient in der Größenordnung von 11·10⁻⁶ K⁻¹ mindestens im Betriebsbereich der Hochtemperatur-Brennstoffzelle 10. Dadurch sind durch thermische Ausdehnung bedingte mechanische Spannungen in der elektrochemischen Funktionseinheit 12, die deren Funktion behindern oder diese gar zerstören können, weitgehend vermieden.

Ferner weist das Material, aus dem die Matrixstruktur 48 gefertigt ist, eine hohe Korrosionsbeständigkeit und Oxidationsbeständigkeit auf. Es ist dabei zu berücksichtigen, daß in der anodenseitigen, durch die Wasserstoffzuführung reduzierenden und aufgrund der Wasserentstehung feuchten Atmosphäre und den entsprechend hohen Betriebstemperaturen eine sehr gute Oxidationsbeständigkeit erforderlich ist.

Als geeignete Materialien für die Matrixstruktur 48 haben sich Chrom-Aluminiumlegierungen wie MCrAls, MCrAlYs und ferritische Stahllegierungen mit hohem Chrom-Anteil und/oder Aluminium-Anteil erwiesen. Die Oxidationsbeständigkeit einer solchen Matrixstruktur 48 beruht auf der Ausbildung sehr stabiler und schützender Chromoxid- und/oder Aluminiumoxid-Deckschichten (Cr₂O₃- und/oder Al₂O₃-Deckschichten).

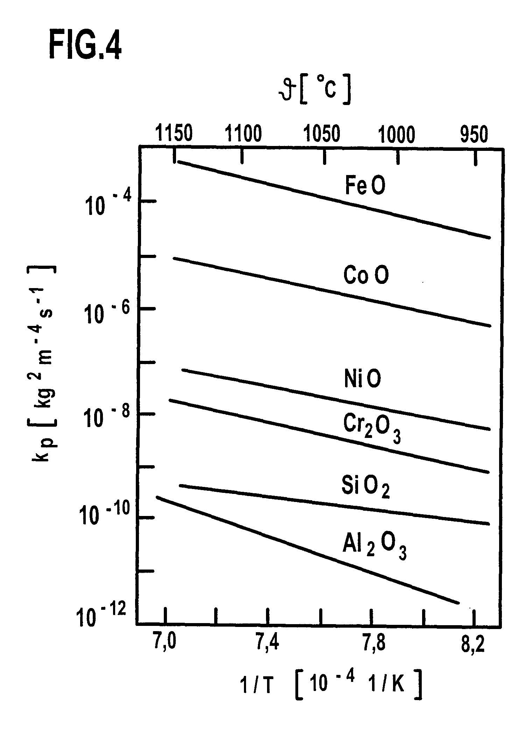

In Figur 4 ist das Temperaturverhalten der parabolischen Oxidationskonstanten kₚ für einige Werkstoffe und insbesondere Metalle gezeigt. Man sieht, daß vor allem Aluminiumoxid eine sehr niedrige Oxidationskonstante aufweist und damit wiederum einem Werkstück aus diesem Material eine hohe Oxidationsbeständigkeit verliehen ist. Dies liegt vor allem daran, daß entsprechende Deckschichten wenig Punktdefekte aufweisen, in die sich Sauerstoff einlagern kann.

Günstig ist es dann, wenn der Werkstoff für die Matrixstruktur eine parabolische Oxidationskonstante aufweist, welche unterhalb von 1000 °C unterhalb von ca. 10⁻⁷ kg²m⁻⁴s⁻¹ liegt.

Allerdings sind die schützenden Aluminiumoxid-Deckschichten der Matrixstruktur 48 elektrisch nicht leitend. Um einen Ladungstransport von der Anode 16 zu der Bipolarplatte 28 zu ermöglichen, ist deshalb eine Sekundärstruktur 50 aus einem leitfähigen Material vorgesehen, welche in die Matrixstruktur mit einem solchen Volumenanteil eingebettet ist, daß eben eine elektrische Querleitfähigkeit zu der Oberfläche 22 (parallel zur Normalenrichtung der Oberfläche 22) gewährleistet ist. Es läßt sich bei entsprechender Ausbildung der Sekundärstruktur auch vorteilhafterweise eine, zur Normalen der Oberfläche 22 senkrechte Leitfähigkeit herstellen. Die Sekundärstruktur 50 ist insbesondere aus Nickel oder einer Nickellegierung gefertigt. Nickel weist grundsätzlich eine zufriedenstellende Oxidationsbeständigkeit auf (siehe Figur 4) und eine hohe elektrische Leitfähigkeit. Allerdings ist der thermische Ausdehnungskoeffizient sehr hoch, so daß durch die alleinige Ausbildung des Trägers 14 aus Nickel oder einer Nickellegierung große Probleme bezüglich Schichthaftung der elektrochemischen Funktionseinheit 12 einschließlich Rißbildung entstehen würden. Poröse Nickelfliese weisen zudem eine relativ geringe mechanische Stabilität auf, so daß die Stützfunktion für die elektrochemische Funktionseinheit 12 eingeschränkt wäre.

Erfindungsgemäß ist nun der Anteil der Sekundärstruktur 50 derart minimiert, daß eben gerade die elektrische Querleitfähigkeit zur Oberfläche 22 sichergestellt ist. Dadurch läßt sich dann eine Anpassung des Trägers 14 an die thermische Ausdehnung des Elektrolyts 20 erreichen und damit ein thermischer Mismatch vermeiden. Der entsprechende Träger 14 weist eine hohe Korrosionsbeständigkeit und Oxidationsbeständigkeit und sorgt für eine gute thermische Zyklierbarkeit der mit ihm hergestellten Brennstoffzelle und zum anderen ist eine hohe elektrische Leitfähigkeit und insbesondere Querleitfähigkeit zur Oberfläche 22 und Längsleitfähigkeit in der Ebene des Drahtgewebes 46 sichergestellt. Darüber hinaus ist aufgrund der Poren 47 die Gaspermeabilität von dem Gaszuführungsraum 32 zur Anode 16 sichergestellt und Reaktionsprodukte der elektrochemischen Reaktionen wie Wasserdampf sind von der Anode 16 abführbar. Weiterhin weist der Träger 14 eine hohe mechanische Stabilität auf, um als Stützstruktur auch für sehr dünne elektrochemische Funktionsschichten 16, 18, 20 der elektrochemischen Funktionseinheit 12 dienen zu können.

Beispielsweise liegt der Gewichtsanteil der Sekundärstruktur 50, wenn diese aus Nickel oder einer Nickellegierung gefertigt ist, im Bereich zwischen 10 % und 60 % des Gewichtsanteils der Matrixstruktur 48. Der Volumenanteil ist jedoch geringer.

Zur Ausbildung der Sekundärstruktur 50 weist das Drahtgewebe 46 beispielsweise Schußdrähte 52 auf, welche zwischen der Oberfläche 22, die diese teilweise bilden, und einer unteren Begrenzungsfläche 54 der ersten Lage 42 verlaufen. Nicht alle Schußdrähte sind dabei von der Sekundärstruktur 50 umfaßt, d. h. es liegen auch Schußdrähte 56 vor, welche Teil der Matrixstruktur 48 sind.

Ein Teilbereich, in dem eine Matrixstruktur 48 und eine Sekundärstruktur 50 zur Sicherstellung einer elektrischen Querleitung vorgesehen ist, ist damit durch die erste Lage 42, d. h. durch das Drahtgewebe 46, gebildet. Es kann aber auch vorgesehen sein, daß der gesamte Träger 14 von seiner Oberfläche 22 bis zu einer abgewandten Oberfläche in eine Matrixstruktur und Sekundärstruktur aufgeteilt ist.

Bei dem in Figur 3 gezeigten Ausführungsbeispiel ist das Drahtgewebe 46, welches die erste Lage 42 bildet, eine Tresse mit im wesentlichen gleichmäßig beabstandeten Kettdrähten 58, die insbesondere Teil der Matrixstruktur 48 sind. Das Drahtgewebe 46 ist beispielsweise in Körperbindung gewebt (Körpertresse), bei der die Schußdrähte dicht aneinandergeschlagen sind, so daß ein Schußdraht jeweils über und unter einem Kettdraht liegt. Dadurch ergibt sich eine glatte Oberfläche 22, und die entsprechend hergestellte mechanische Struktur ist sehr stabil.

Eine Maschenweite des Drahtgewebes 46, welches die erste Schicht 42 bildet, ist beispielsweise in einer Richtung kleiner als 0,4 mm und in der Querrichtung dazu kleiner als 2 mm.

Es hat sich gezeigt, daß auf ein solches Drahtgewebe 46 mit seiner Oberfläche 22 die elektrochemische Funktionseinheit 12 und insbesondere die Anodenschicht 16 direkt ohne weitere Deckschicht aufgebracht werden kann und insbesondere über ein Dünnschichtverfahren aufgebracht werden kann. Insbesondere lassen sich thermische Beschichtungsverfahren wie Flammspritzen, Lichtbogenspritzen, Detonationsflammspritzen oder Plasmaspritzen einsetzen, um dünne elektrochemische Funktionsschichten auf dem Träger 14, beginnend mit dessen Oberfläche 22, aufzubringen. Es lassen sich auch sintertechnische Verfahren wie Foliengießen, Vakuuminfiltrieren, Siebdruck und thermochemische oder thermophysikalische Verfahren wie CVD, EVD oder PVD zur Ausbildung von elektrochemischen Funktionsschichten auf dem Träger 14 einsetzen.

Durch die glatte Oberflächenausbildung des erfindungsgemäßen Drahtgewebes 46 wiederum läßt sich beim Aufbau der Brennstoffzelle 10 eine hohe Planarität der elektrochemischen Funktionsschichten 16, 18, 20 erreichen. Auf diese Weise läßt sich die Brennstoffzelle 10 kostengünstig mit hoher Reproduzierbarkeit insbesondere ihrer elektrochemischen Eigenschaften herstellen und entsprechend ein Brennstoffzellenstapel herstellen.

Die zweite Lage 44 ist ebenfalls durch ein Drahtgewebe 60 gebildet, welches beispielsweise ein normales Drahtgewebe in Glatte- oder Leinenbindung ist. Dieses Drahtgewebe 60 weist vorzugsweise eine Porosität mit Poren 62 auf, die quer zur Oberfläche 22 angeordnet sind mit einer Ausdehnung, die größer ist als die der Poren 47 des die erste Lage 42 bildenden Drahtgewebes 46. Das Drahtgewebe 60 läßt sich auf diese Weise gut mit der Bipolarplatte 28 verlöten, um eine elektrische Verbindung herzustellen, wobei aufgrund der Porengröße der Kapillareffekt verringert ist, so daß das Eindringen von Lot in die Poren 62 weitgehend vermieden ist und damit wiederum das Drahtgewebe 60 flächig verlötbar ist.

Eine Maschenweite des Drahtgewebes 60 liegt beispielsweise in der Größenordnung von 2,5 mm bei einem Drahtdurchmesser von beispielsweise 0,4 mm.

Auch das Drahtgewebe 60 weist beispielsweise Kettdrähte 64 und Schußdrähte 66 auf, welche jeweils parallel zueinander beabstandet angeordnet sind, um entsprechende Maschen mit den Poren 62 zu bilden.

Das Drahtgewebe 60 kann ähnlich wie das Drahtgewebe 46 eine Matrixstruktur und eine Sekundärstruktur insbesondere zur Herstellung der elektrischen Querleitfähigkeit bezogen auf die Oberfläche 22 aufweisen (in der Zeichnung nicht gezeigt).

Bei der in Figur 3 gezeigten Ausführungsform ist das Drahtgewebe 60 beispielsweise aus ferritischem Stahl hergestellt. Eine besondere Querleitfähigkeit in der zweiten Lage 44 muß nicht hergestellt werden, wenn für eine Längsleitfähigkeit parallel zur Oberfläche 22 in der ersten Lage 42 gesorgt wird, so daß ein Ladungstransport von der Anode 16 über die erste Lage 42 über deren Randbereich zu der Bipolarplatte 28 stattfinden kann. Das Drahtgewebe 46 sorgt dann überhaupt für die elektrische Querleitfähigkeit, daß Ladungsträger zu dem Drahtgewebe 60 gelangen.

Das Drahtgewebe 46 läßt sich aufgrund seiner engeren Maschenweite mit dem Drahtgewebe 60 versintern oder verschweißen, so daß das kapillare Eindringen von Lot in die Poren 47 vermieden ist.

Die beiden Drahtgewebe 46 und 60 lassen sich getrennt herstellen und werden dann eben durch Versinterung insbesondere unter Vakuumbedingung miteinander verbunden. Auf diese Weise ist eine Oxidation der Kontaktstellen vermieden. Damit wiederum sind durchgehende Leitungspfade von der Oberfläche 22 über die Sekundärstruktur 50 des Drahtgewebes 46 und dann die Kettdrähte 64 und Schußdrähte 66 des Drahtgewebes 60 geschaffen, um so eben einen Ladungstransport zwischen Bipolarplatte 28 und Anode 16 zu ermöglichen; gleichzeitig läßt sich der entsprechende Träger 14 auf Gaskanälen des Gaszuführungsraums 32 verlöten, wenn diese durch Stege getrennt sind, und an Randbereichen mit der Bipolarplatte 28 verschweißen, um für einen guten elektrischen Kontakt zu sorgen. Der Träger 14 weist eine hohe mechanische Stabilität auf, um als Stützstruktur für die elektrochemische Funktionseinheit 12 zu dienen, es liegt eine hohe Korrosions- sowie Oxidationsbeständigkeit auch bei den hohen Betriebstemperaturen der Hochtemperatur-Brennstoffzelle 10 vor, eine gute thermische Zyklierbarkeit ist gewährleistet, die Oberfläche 22 ist beschichtbar mit guter Planarität und auch die weiteren Eigenschaften des Trägers 14 sind an die elektrochemische Funktionseinheit 12 angepaßt (thermischer Ausdehnungskoeffizient, Oberflächenbeschaffenheit und Oberflächenmorphologie). Es lassen sich dann insbesondere dünne elektrochemische Funktionsschichten 16, 18, 20 auf dem Träger 14 herstellen.

## Patentansprüche

1. Träger für eine elektrochemische Funktionseinheit (12) einer Hochtemperatur-Brennstoffzelle (10), mit einer Oberfläche (22) zur Anordnung der elektrochemischen Funktionseinheit (12), wobei der Träger (14) zur Zuführung von Reaktanden zu einer Elektrode (16) der elektrochemischen Funktionseinheit (12) und/oder Abführung von Reaktionsprodukten von der Elektrode (16) eine Porosität aufweist,
**gekennzeichnet durch** eine Matrixstruktur (48) mindestens in einem die Oberfläche (22) für die elektrochemische Funktionseinheit (12) umfassenden Teilbereich (42), welche die Stützstruktur für die elektrochemische Funktionseinheit (12) bildet, und **durch** eine Sekundärstruktur (50) aus einem elektrisch leitfähigen Material, welche für eine elektrische Leitfähigkeit quer zur Oberfläche (22) für die elektrochemische Funktionseinheit (12) sorgt.

2. Träger nach Anspruch 1, **dadurch gekennzeichnet, daß** das Material für die Matrixstruktur (48) einen thermischen Ausdehnungskoeffizienten aufweist, welcher mindestens im Betriebstemperaturbereich der Hochtemperatur-Brennstoffzelle (10) an einen Elektrolyt (20) der elektrochemischen Funktionseinheit (12) angepaßt ist.

3. Träger nach Anspruch 2, **dadurch gekennzeichnet, daß** das Material für die Matrixstruktur (48) einen thermischen Ausdehnungskoeffizienten im Bereich zwischen 9 · 10⁻⁶ K⁻¹ und 14 · 10⁻⁶ K⁻¹ liegt.

4. Träger nach einem der vorangehenden Ansprüche, **dadurch gekennzeichnet, daß** das Material für die Matrixstruktur (48) und Sekundärstruktur (50) eine hohe Korrosionsbeständigkeit und Oxidationsbeständigkeit aufweist.

5. Träger nach Anspruch 4, **dadurch gekennzeichnet, daß** eine parabolische Oxidationskonstante des Materials für die Matrixstruktur und Sekundärstruktur kleiner als 10⁻⁷ kg²m⁻⁴s⁻¹ mindestens unterhalb 1000 °C ist.

6. Träger nach einem der vorangehenden Ansprüche, **dadurch gekennzeichnet, daß** das Material für die Matrixstruktur (48) eine Chrom umfassende Legierung ist.

7. Träger nach einem der vorangehenden Ansprüche, **dadurch gekennzeichnet, daß** das Material für die Matrixstruktur (48) eine Aluminium umfassende Legierung ist.

8. Träger nach einem der vorangehenden Ansprüche, **dadurch gekennzeichnet, daß** die Sekundärstruktur (50) bezüglich ihres Gewichtsanteils im Träger (14) zwischen 10 % und 60 % liegt.

9. Träger nach einem der vorangehenden Ansprüche, **dadurch gekennzeichnet, daß** die Sekundärstruktur (50) in die Matrixstruktur (48) eingebettet ist.

10. Träger nach einem der vorangehenden Ansprüche, **dadurch gekennzeichnet, daß** die Sekundärstruktur (50) so ausgebildet ist, daß ein Ladungstransportfähigkeit von der Oberfläche (22) für die elektrochemische Funktionseinheit (12) mindestens bis zu einer der Oberfläche abgewandten Begrenzungsfläche (54) eines Teilbereichs (42) hergestellt ist.

11. Träger nach einem der vorangehenden Ansprüche, **dadurch gekennzeichnet, daß** das Material für die Sekundärstruktur (50) Nickel oder eine Nickellegierung oder ein ferritischer Stahl oder ein Edelmetall ist.

12. Träger nach einem der vorangehenden Ansprüche, **gekennzeichnet durch** eine Ausbildung mittels eines Drahtgewebes oder mehrerer Drahtgeweben (46, 60).

13. Träger nach Anspruch 12, **dadurch gekennzeichnet, daß** die Sekundärstruktur (50) durch Schußdrähte (54) gebildet ist.

14. Träger nach Anspruch 12 oder 13, **dadurch gekennzeichnet, daß** das Drahtgewebe oder ein Drahtgewebe (46) als Tresse ausgebildet ist.

15. Träger nach Anspruch 14, **dadurch gekennzeichnet, daß** die Tresse (46) in Körperbindung gewebt ist.

16. Träger nach dem Oberbegriff von Anspruch 1 oder einem der vorangehenden Ansprüche, **dadurch gekennzeichnet, daß** eine Porengröße an der Oberfläche (22) für die elektrochemische Funktionseinheit (12) kleiner ist als eine Porengröße an einer Oberfläche (54) zur Verbindung des Trägers (14) mit einer Bipolarplatte (28).

17. Träger nach einem der vorangehenden Ansprüche, **gekennzeichnet durch** einen mehrlagigen Aufbau.

18. Träger nach Anspruch 17, **dadurch gekennzeichnet, daß** benachbarte Trägerlagen miteinander versintert oder verschweißt sind.

19. Träger nach Anspruch 17 oder 18, **dadurch gekennzeichnet, daß** ein Teilbereich (42) mit elektrischer Querleitfähigkeit durch eine die Oberfläche (22) für die elektrochemische Funktionseinheit (12) aufweisende Trägerlage (42) gebildet ist.

20. Träger nach einem der Ansprüche 12 bis 19, ,**gekennzeichnet durch** ein Fein-Drahtgewebe (46), welches die Oberfläche (22) für die elektrochemische Funktionseinheit (12) bildet, und mindestens ein sich anschließendes Grob-Drahtgewebe (60).

21. Träger nach Anspruch 20, **dadurch gekennzeichnet, daß** das Fein-Drahtgewebe (46) als Tresse ausgebildet ist.

22. Träger nach Anspruch 20 oder 21, **dadurch gekennzeichnet, daß** das Grob-Drahtgewebe (60) in Leinenbindung gewebt ist.

23. Träger nach einem der Ansprüche 20 bis 22, **dadurch gekennzeichnet, daß** das Fein-Drahtgewebe (46) so ausgebildet ist, daß eine Elektrodenschicht (16) direkt aufbringbar ist.

24. Träger nach einem der Ansprüche 20 bis 23, **dadurch gekennzeichnet, daß** eine Maschenweite des Fein-Drahtgewebes (46) in einer Richtung kleiner ist als 0,4 mm und in der Querrichtung kleiner ist als 2 mm.

25. Träger nach einem der Ansprüche 20 bis 24, **dadurch gekennzeichnet, daß** das mindestens eine Grob-Drahtgewebe (60) so ausgebildet und aus einem solchen Material hergestellt ist, daß es eine elektrische Leitfähigkeit mindestens zu seinen seitlichen Enden hin aufweist.

26. Träger nach einem der vorangehenden Ansprüche, **dadurch gekennzeichnet, daß** die Oberfläche (22) für die elektrochemische Funktionseinheit (12) im wesentlichen eben ist.

27. Hochtemperatur-Brennstoffzelle, umfassend eine elektrochemische Funktionseinheit (12) mit einer Anode (16), mit einem oxidkeramischen Elektrolyt (20) und mit einer Kathode (18), **dadurch gekennzeichnet, daß** die elektrochemische Funktionseinheit (12) auf einem Träger (14) gemäß einem der vorangehenden Ansprüche sitzt.

28. Hochtemperatur-Brennstoffzelle nach Anspruch 27, **dadurch gekennzeichnet, daß** die Anode (16) auf der Oberfläche (22) des Trägers (14) aufgebracht ist.

29. Hochtemperatur-Brennstoffzelle nach Anspruch 27 oder 28, **dadurch gekennzeichnet, daß** die elektrochemische Funktionseinheit (12) in Dünnschichttechnologie hergestellt ist.

30. Hochtemperatur-Brennstoffzelle nach einem der Ansprüche 27 bis 29, **dadurch gekennzeichnet, daß** der Träger (14) an einer Bipolarplatte (28) sitzt.

31. Hochtemperatur-Brennstoffzelle nach Anspruch 30, **dadurch gekennzeichnet, daß** der Träger (14) an die Bipolarplatte (28) gelötet ist und/oder mit dieser verschweißt ist.

32. Hochtemperatur-Brennstoffzelle nach Anspruch 30 oder 31, **dadurch gekennzeichnet, daß** in der Bipolarplatte (28) einer der Oberfläche (22) für die elektrochemische Funktionseinheit (12) abgewandten Oberfläche (54) des Trägers (14) zugewandt ein Gaszuführungsraum (32) gebildet ist.
